# EUROPÄISCHE PATENTSCHRIFT

(11) **EP 0 833 805 B1**
(45) Veröffentlichungstag und Bekanntmachung des Hinweises auf die Patenterteilung: **18.08.1999**
(21) Anmeldenummer: 96922857.6
(22) Anmeldetag: 20.06.1996
(51) Int. Cl.: C04B 41/70

(54) **BETONFORMTEIL MIT GLANZEFFEKT**
CONCRETE MOULDING WITH SHINING SURFACE
PIECE MOULEE EN BETON A SURFACE BRILLANTE

(30) Priorität: 23.06.1995 DE 19522531
(43) Veröffentlichungstag der Anmeldung: 08.04.1998
(73) Patentinhaber: WINDI WINDERLICH GmbH, D-20259 Hamburg (DE)
(72) Erfinder: KAHL, Walther, D-21107 Hamburg (DE)
(74) Vertreter: UEXKÜLL & STOLBERG
(86) Internationale Anmeldenummer: EP9602669
(87) Internationale Veröffentlichungsnummer: WO9700839

(56) Entgegenhaltungen:
- GB-A- 173 401
- GB-A- 389 639
- US-A- 2 004 323
- US-A- 2 195 587
- CHEMICAL ABSTRACTS, vol. 110, no. 24, 12.Juni 1989 Columbus, Ohio, US; abstract no. 218088w, T. MAEKAWA: Seite 343; XP000180601 & JP,A,63 256 583 (ID.)
- CHEMICAL ABSTRACTS, vol. 96, no. 20, 17.Mai 1982 Columbus, Ohio, US; abstract no. 167636f, DANTO CO.: Seite 325; XP000186294 & JP,A,57 017 484 (ID.)
- CHEMICAL ABSTRACTS, vol. 114, no. 26, 1.Juli 1991 Columbus, Ohio, US; abstract no. 252818b, S. A. SHIMANOVICH: Seite 351; XP000194974 & SU,A,1 622 163 (ID.)

## Beschreibung

Die Erfindung betrifft ein Betonformteil mit Glanzeffekt, welches insbesondere als Baustoff, wie Fliesen oder Bodenplatten, eingesetzt werden kann.

Die Einfärbung von Beton oder Betonformteilen ist bekannt, sie wird üblicherweise durch Einarbeitung größerer Mengen an Buntpigmenten in die Betonmischung durchgeführt. Die durch sie erzielte Farbgebung erweckt in vielen Fällen beim Betrachter den erwünschten Eindruck, daß es sich um ein natürliches Material, zumindest jedoch nicht um Beton handelt.

Da Buntpigmente verhältnismäßig preisgünstig sind, können sie auch in größeren Mengen in die Betonmischung eingegeben werden, damit der erwünschte Effekt erzielt wird. Eine derartige Vorgehensweise ist bei den sogenannten Glanzpigmenten nicht möglich, da sie teuer sind. Der Begriff Glanzpigmente umfaßt Metalleffekt-, Perlglanz- und Interferenzpigmente. In allen Fällen beruhen die Glanzeffekte auf der gerichteten Reflektion an flächig ausgebildeten und ausgerichteten Pigmentteilchen (vgl. Büchner et al. in "Industrielle Anorganische Chemie", Verlag Chemie 1984, insbesondere S. 577 ff.). Ein weiterer Nachteil dieser Glanzpigmente ist es, daß sie sich nur schwierig fest in den Beton einbinden lassen, was auf nur geringe Wechselwirkung mit den übrigen Betonbestandteilen schließen läßt.

Der Erfindung liegt demgemäß die Aufgabe zugrunde, ein Betonformteil mit Glanzeffekt zu schaffen, welches trotz eines nur geringen Anteils an Glanzpigment einen hohen Glanzeffekt aufweist und bei welchem das Glanzpigment fest in die Betonmatrix eingebaut und daher gegenüber Ablösung infolge mechanischer Beanspruchung, wie Abrieb, widerstandsfähig ist.

Diese Aufgabe wird überraschenderweise durch das Betonformteil mit Glanzeffekt gemäß Anspruch 17 gelöst.

Die Erfindung betrifft weiter ein Verfahren zur Herstellung eines Betonformteils mit Glanzeffekt gemäß den Ansprüchen 1 bis 16 sowie die Verwendung von wäßriger Alkalisilicat-Lösung zur Erhöhung des Glanzeffektes von Betonformteilen und/oder zur Verbesserung der Einbindung von Glanzpigment in Betonformteile gemäß Anspruch 18.

Bei der Herstellung des erfindungsgemäßen Betonformteils mit Glanzeffekt wird in der Weise vorgegangen, daß man
(a) eine nicht-abgebundene Betonmischung zu einem Betongrundkörper formt,
(b) auf den Grundkörper eine nicht-abgebundene Vorsatzschicht aufbringt, welche (i) Beton und zusätzlich (ii) Glanzpigment enthält,
(c) auf die nicht-abgebundene Vorsatzschicht eine wäßrige Alkalisilicat-Lösung aufbringt und
(d) die Betonmischung des Betongrundkörpers und die Vorsatzschicht abbinden läßt.

Dabei wird als Betonmischung in Stufe (a) und als Beton in Stufe (b) ein auf Zement, insbesondere Portland-Zement, basierender Beton eingesetzt.

Der in Stufe (a) durchgeführte Formungsschritt kann in beliebiger Weise, z.B. durch Pressen oder Eingießen der nicht-abgebundenen Betonmischung in eine geeignete Stahlform, durchgeführt werden. Üblicherweise gibt eine eingesetzte Form bereits die endgültige Form des Betonformteils wieder.

Nach dem Formgebungsschritt (a) wird auf den gebildeten Betongrundkörper eine nicht-abgebundene Betonmischung aufgebracht, um eine Vorsatzschicht zu bilden. Diese Vorgehensweise wird auch als Vorsatzschicht-Technik bezeichnet. Die eingesetzte Betonmischung wird hergestellt, indem einem üblichen Beton (i) zusätzlich Glanzpigment (ii) zugegeben wird. Bevorzugt wird dem Beton auch noch (iii) Calciumcarbonat, Calciumoxid und/oder Calciumhydroxid zugesetzt, um eine gute Fixierung der Pigmentteilchen in der Betonmatrix zu erzielen. Vorzugsweise wird Calciumcarbonat in Form von Kalk oder Kreide verwendet. Die eingesetzte Gesamtmenge an Calciumcarbonat, Calciumoxid und/oder Calciumhydroxid beträgt vorzugsweise höchstens 10 Vol.-% und insbesondere höchstens 6 Vol.-% bezogen auf das Volumen des Betons (i).

Bei dem Glanzpigment (ii) handelt es sich vorzugsweise um ein Perlglanzpigment und/oder ein Interferenzpigment. Besonders bevorzugte Pigmente sind die von der Firma Merck, Darmstadt, unter der Marke Iriodin® erhältlichen Perlglanz- und Interferenzpigmente. Das Glanzpigment wird vorzugsweise in einer Menge von mindestens 5 Vol.-%, bevorzugt 5-30 und besonders bevorzugt 5-20 Vol.-% bezogen auf das Volumen des Betons (i) verwendet.

Es hat sich als besonders vorteilhaft erwiesen, Glanzpigment (ii) in Form einer Suspension in wäßrigem Caseinleim einzusetzen. Dabei sind solche Caseinleime bevorzugt, die Calciumhydroxid enthalten. Die Verwendung als Suspension in Caseinleimen führt zu einer besonders dauerhaften und festen Fixierung des Pigmentes in der Betonmatrix, was z.B. an einem dauerhaften Glanzeffekt und hoher Abrasivität trotz längerer Lagerung im Freien bei Frost erkennbar ist.

Sofern gewünscht, können in die Vorsatzschicht auch noch herkömmliche Buntpigmente, wie z.B. Eisenoxid-Pigmente eingearbeitet werden, um eine etwaige gewünschte Einfärbung zu erzielen.

Als besonders vorteilhaft hat sich zudem die weitere Einarbeitung von (iv) Bimssteinpulver in die Vorsatzschicht erwiesen. Dieses führt nicht nur zu einem höheren Perlglanzeffekt bei dem fertigen Betonformteil, sondern erhöht offensichtlich auch den Zusammenhalt der Betonkomponenten der Vorsatz schicht untereinander.

Der zur Bildung der Vorsatz schicht eingesetzte Beton ist zudem vorzugsweise ein Beton, der einen nur geringen Gehalt an Wasser aufweist. Ein solcher Beton wird auch als halbtrockener Beton bezeichnet.

Zur Erzielung eines besonders hohen Glanzeffektes kann in einer bevorzugten Ausführungsform die nicht-abgebundene Vorsatz schicht in Stufe (b) in der Weise aufgebracht werden, daß zuerst eine Mischung mit Gehalt an Beton (i) und dann auf diese Mischung eine Schicht Glanzpigment (ii) aufgebracht wird. In diesem Fall liegt eine große Menge an Glanzpigment in der Oberflächenschicht der Vorsatzschicht vor und führt zu einem besonders ausgeprägten Glanzeffekt.

Die Reihenfolge der Stufe (a) und (b) ist beliebig, d.h. es kann auch zuerst die Vorsatzschicht gebildet und dann auf diese der Betongrundkörper aufgebracht werden.

Nach der Aufbringung der Vorsatzschicht in Stufe (b) wird in Stufe (c) auf die zumindest noch nicht vollständig abgebundene Vorsatzschicht eine wäßrige Alkalisilicat-Lösung aufgebracht, was vorzugsweise durch Aufsprühen erfolgt, um eine Veränderung der Oberflächenstruktur der Vorsatzschicht zu vermeiden, wie sie z.B. bei Aufpinseln unter Druck auftreten könnte. Vorteilhafterweise wird die wäßrige Alkalisilicat-Lösung in einer für die Sättigung der Vorsatzschicht und insbesondere auch des Betongrundkörpers ausreichenden Menge eingesetzt. Eine solche Sättigung kann z.B. dadurch erzielt werden, daß während des Abbindevorganges der Vorsatzschicht und des Betongrundkörpers, z.B. während vier Tagen, mehrfach Alkalisilicat-Lösung aufgetragen wird, bis sich auf der Oberfläche der Vorsatzschicht ein schmieriger wasserlöslicher Film bildet. Diese Filmbildung, die auch anhand einer glänzenden Oberfläche erkennbar ist, zeigt eine Sättigung an.

Als wäßrige Alkalisilicat-Lösung werden üblicherweise im Handel als Wasserglas erhältliche Produkte eingesetzt. Vorzugsweise wird dabei eine wäßrige Lösung von Natriumsilicat und besonders bevorzugt eine von Kaliumsilicat verwendet. Diese sind auch als Natron- oder Kali-Wasserglas bekannt.

Durch Verwendung der wäßrigen Alkalisilicat-Lösung wird der Glanzeffekt verglichen mit dem eines Betonformteils, welches mit dieser Lösung nicht behandelt wurde, deutlich gesteigert. Diese überraschende Steigerung des Glanzeffektes wird möglicherweise durch eine Reaktion der Alkalisilicat-Lösung mit Komponenten der Vorsatzschicht erzielt. Weiter führt die Behandlung mit Alkalisilicat-Lösung auch überraschenderweise zu einer verbesserten Einbindung der Glanzpigmente in die Beton-Matrix der Vorsatzschicht, was daran erkennbar ist, daß auch bei mechanischer Beanspruchung der vollständig abgebundenen Vorsatzschicht, wie z.B. durch Kratzen oder starkes Bürsten, es nicht zu einer Ablösung des Glanzpigmentes kommt.

Schließlich läßt man in Stufe (d) die Betonmischung des Betongrundkörpers sowie die Vorsatzschicht abbinden, um das fertige erfindungsgemäße Formteil zu erhalten.

Sofern gewünscht, können sich an diesen Schritt noch weitere mechanische Behandlungen, wie z.B. Zuschneiden zu Formteilen gewünschter Größe, wie Platten und Fliesen, oder weitere Oberflächenbehandlungen anschließen. Formgebungsschritte können auch zu beliebigen anderen Zeitpunkten während der Herstellungsverfahren erfolgen.

Zur Erzielung einer hohen Festigkeit des erfindungsgemäßen Betonformteils hat es sich als vorteilhaft erwiesen, daß man nach Durchführung von Stufe (a) und vor Stufe (b) auf den Betongrundkörper eine den Durchtritt von Wasser behindernde Sperrschicht aufbringt, was insbesondere durch Auftragen von wäßriger Alkalisilicat-Lösung auf den Betongrundkörper erfolgt. Durch diese Sperrschicht wird bei der Behandlung der nicht-abgebundenen Vorsatzschicht mit wäßriger Alkalisilicat-Lösung in Stufe (c) bewirkt, daß Wasser an der Oberfläche der nicht-abgebundenen Vorsatzschicht auftritt. Dieses die Härte des fertigen Betonformteils nachteilig beeinflussende Wasser kann dann von der Oberfläche entfernt werden.

Schließlich hat es sich auch als günstig erwiesen, wenn zwischen den Stufen (b) und (c) der mit der aufgebrachten Vorsatzschicht versehene Grundkörper verdichtet wird, was durch manuelles Stampfen oder durch Pressen mit üblichen Pressen erfolgen kann. Die Verdichtung führt zu einer Verbesserung der Härte und Bruchfestigkeit des fertigen Betonformteils.

Aufgrund der vorteilhaften Eigenschaften von wäßriger Alkalisilicat-Lösung für Betonformteile mit Glanzeffekt betrifft die Erfindung ebenfalls die Verwendung von wäßriger Alkalisilicat-Lösung zur Erhöhung des Glanzeffektes von Betonformteilen, die eine Vorsatzschicht mit Gehalt an (i) Beton und zusätzlichem (ii) Glanzpigment aufweisen, und/oder zur Verbesserung der Einbindung des Glanzpigmentes in solche Betonformteile, indem die wäßrige Alkalisilikat-Lösung auf die nicht-abgebundene Vorsatzschicht aufgebracht wird.

Die Erfindung wird nachstehend anhand von Beispielen näher erläutert.

### Beispiele

### Beispiel 1:

### Herstellung erfindungsgemäßer Bodenplatten

Es wurden erfindungsgemäße Betonbodenplatten mit Glanzeffekt im Format 100 x 200 cm hergestellt.

Dazu wurde eine 2 cm starke Vorsatzschicht aus halbtrockenem Estrichbeton, der zu 33 Vol.-% Portlandzement enthielt, in eine geeignete Form eingebracht. In die Betonmischung wurden 5 Vol.-% Eisenoxidpigmente eingearbeitet. Dann wurden in die Vorsatzschicht 10 Vol.-% einer wäßrigen Suspension von Kalkcasein und Iriodin®-Pigment 9303 Royal Gold WR maschinell eingerührt. Die Vorsatzschicht wurde danach mit einer Rüttelmaschine verdichtet, und es wurde eine 5 cm starke Betonschicht in die Form eingebracht und ebenfalls durch Rütteln maschinell verdichtet.

Anschließend wurde während des Abbindevorganges des Betons auf die Oberfläche 2 x Kali-Wasserglas aufgestrichen.

Nach vollständigem Abbinden des Betons des Grundkörpers und der Vorsatzschicht zeigten die Oberflächen der erhaltenen Betonbodenplatten deutlich sichtbaren Goldglanz des Iriodin®-Pigments. Trotz Lagerung von derartigen Bodenplatten über mehrere Monate im Freien, wobei diese insbesondere starken Frost ausgesetzt waren, kam es zu keiner Abschwächung des Goldglanzes, und die Oberflächen der Platten erwiesen sich auch nach dieser Lagerung als so abriebfest, daß ein Abkratzen des Pigmentes mit einem Fingernagel nicht möglich war.

### Herstellung einer Kalkcasein-Pigment-Suspension

Zur Herstellung der oben erwähnten wäßrigen Suspension von Kalkcasein und Iriodin®-Pigment wurde insbesondere so vorgegangen, daß Casein mit 20 %igem wäßrigen Ca(OH)₂ unter Bildung von Kalkcasein, das heißt einem Caseinleim, umgesetzt wurde. Ein Volumenteil der erhaltenen Mischung wurde gegebenenfalls mit bis zu 3 Volumenteilen Wasser verdünnt. In die erhaltene verdünnte Mischung wurden dann bis zu 50 Vol.-% Iriodin®-Pigment homogen suspendiert. Die erhaltene Suspension von Pigment und Kalkcasein war dann gebrauchsfertig und konnte z.B. wie oben beschrieben in die Betonmischung der Vorsatzschicht eingearbeitet werden.

### Beispiel 2:

Es wurde ein erfindungsgemäßes Betonformteil mit Glanzeffekt in Form einer Beton-Bodenplatte mit den Maßen 30 × 30 × 50 cm hergestellt.
Dazu wurde Estrich-Beton auf Portlandzement-Basis in eine geeignete Stahlform gegeben, und auf diesen Estrich-Beton wurde zur Bildung einer 5 cm hohen Vorsatzschicht eine halbtrockene Betonmischung auf Portlandzement-Basis mit den folgenden zusätzlichen Komponenten aufgebracht.

### Zusätzliche Komponenten:

6 Vol.-% gemahlene deutsche Kreide
10 Vol.-% Eisenoxid Gelb-Pigment
10-15 Vol.-% Iriodin® Interferenzpigment Grün, Serie 1000 WR

Anstelle von Kreide konnte auch Calciumoxid oder Calciumhydroxid eingesetzt werden.

Nach Aufbringen der Vorsatzschicht wurde diese durch Stampfen verdichtet. Anschließend wurde während des Abbindevorgangs des Betons auf die Oberfläche der Vorsatzschicht mehrfach innerhalb von 4 Tagen Kali-Wasserglas aufgebracht, bis Glanz an der Oberfläche auftrat und damit Sättigung erreicht wurde.

Nach vollständigem Abbinden des Betons des Betongrundkörpers und der Vorsatzschicht zeigte die Oberfläche des Betonformteils Perlglanz und war homogen, glatt und schwach grün. Weiter erwies sie sich als hart und abriebfest.

### Beispiel 3:

Es wurde Beispiel 2 mit der Änderung wiederholt, daß ein Teil des eingesetzten Iriodin®-Pigments trocken auf die Vorsatzschicht aufgestäubt wurde und folgende Zusatzkomponenten der Vorsatzschicht eingesetzt wurden.

### Zusatzkomponenten:

10 Vol.-% Iriodin®-Pigment Moosgrün
10 Vol.-% Bimssteinpulver
10 Vol.-% gemahlene deutsche Kreide

Außerdem wurde in Abänderung von Beispiel 2 die Vorsatzschicht mittels einer Presse hoch verdichtet, was zu einem besonders ausgeprägten Perlglanz bei dem fertigen Betonformteil führte.

In einer zweiten Variante dieses Beispiels wurde zuerst die Vorsatzschicht in die Stahlform eingegeben und anschließend die Estrichschicht aufgebracht. Auf das Aufstäuben von Iriodin®-Pigment wurde dabei verzichtet. Auch auf diese Weise konnte ein Betonformteil mit gutem Perlglanz erhalten werden.

### Beispiel 4:

Beispiel 2 wurde mit den Änderungen durchgeführt, daß die folgenden Komponenten als Zusatzkomponenten eingesetzt wurden

### Zusatzkomponenten:

15 Vol.-% Eisenoxid Gelb-Pigment
10 Vol.-% Iriodin® Moosgrün, Serie 1000 WR
10 Vol.-% Bimssteinpulver
10 Vol.-% Kreide
und daß zwischen dem Betongrundkörper und der Vorsatzschicht eine Sperrschicht erzeugt wurde, indem Wasserglas auf den Betongrundkörper aufgebracht wurde und man dieses mit den Bestandteilen des Betongrundkörpers unter Bildung einer den Wasserdurchtritt behindernden Sperrschicht reagieren ließ. Die Sperrschichtwirkung war daran erkennbar, daß nach Auftragen der Vorsatzschicht und Aufbringen von weiterem Wasserglas auf diese Vorsatzschicht nach ca. einer Stunde Wasser aus der Oberfläche austrat, welches leicht entfernt werdent konnte. Durch Austritt dieses überschüssigen Wassers konnte die Härte der fertigen Platte gesteigert werden.

### Beispiel 5:

Es wurde Beispiel 2 mit der Änderung wiederholt, daß die folgenden Zusatzkomponenten eingesetzt wurden.

### Zusatzkomponenten:

60 Vol.-% eisenoxidfarbiger Sand
10 Vol.-% Bimssteinpulver
6 Vol.-% Kreide
15 Vol.-% Iriodin® Gold Interferenzpigment

### Beispiel 6:

Es wurde Beispiel 2 mit der Änderung wiederholt, daß als Zusatzkomponenten der Vorsatzschicht folgende Substanzen eingesetzt wurden.

### Zusatzkomponenten:

10 Vol.-% gebranntes rotes Eisenoxid-Buntpigment Bayferox®
10 Vol.-% Iriodin® Kupfer
15 Vol.-% Bimssteinpulver
10 Vol.-% Kreide

### Beispiel 7:

Es wurde Beispiel 2 mit der Änderung wiederholt, daß die Vorsatzschicht aus einem Mörtel und Zusatzkomponenten der folgenden Art aufgebaut war.

### Mörtelzusammensetzung:

3 Gew.-Teile Quarzsand
1 Gew.-Teil Bimssteinmehl
2 Gew.-Teile Portlandzement

### Zusatzkomponenten:

7 Vol.-% Iriodin® Pigment Moosgrün, Serie 1000 WR
7 Vol.-% Iriodin® Interferenzpigment Gold
10 Vol.-% Kreide

### Beispiel 8:

Es wurde Beispiel 2 wiederholt mit der Änderung, daß die Vorsatzschicht aus einem Mörtel und Zusatzkomponenten der folgenden Art zusammengesetzt war.

### Mörtelzusammensetzung:

2 Gew.-Teile Bimssteinmehl
3 Gew.-Teile Portlandzement
5 Gew.-Teile Quarzsand

### Zusatzkomponenten:

10 Vol.-% Calciumcarbonat
5 Vol.-% Buntpigment Preußisch Blau
15 Vol.-% Iriodin® Pigment Perlgrün

### Beispiel 9:

Es wurde Beispiele 2 mit der Änderung wiederholt, daß die Vorsatzschicht aus Mörtel und Zusatzkomponenten der folgenden Art zusammengesetzt war.

### Mörtelzusammensetzung:

2 Gew.-Teile Portlandzement
1 Gew.-Teil Bimssteinpulver
übliche Betonzuschläge
Eisenoxid Gelb-Buntpigment

### Zusatzkomponenten:

10 Vol.-% Eisenoxid Gelb-Buntpigment
5 Vol.-% Iriodin® Pigment Moosgrün
5 Vol.-% Iriodin® Interferenzpigment Perlgrün
10 Vol.-% Calciumcarbonat

### Beispiel 10:

Es wurde Beispiel 2 mit der Änderung wiederholt, daß die Vorsatzschicht die folgenden Zusatzkomponenten enthielt.

### Zusatzkomponenten:

10 Vol.-% Bimssteinpulver
10 Vol.-% Calciumcarbonat
10 Vol.-% gelbes Buntpigment
15 Vol.-% Iriodin® Moosgrün, Serie 1000 WR

### Beispiel 11:

Es wurde Beispiel 2 mit der Änderung wiederholt, daß die Vorsatzschicht die folgenden Zusatzkomponenten enthielt.

### Zusatzkomponenten:

10 Vol.-% Bimssteinpulver
10 Vol.-% Calciumcarbonat
5 Vol.-% gelbes Buntpigment
30 Vol.-% Iriodin® Interferenzpigment Perlgrün
5 Vol.-% Iriodin® Moosgrün, Serie 1000 WR

### Beispiel 12:

In diesem Beispiel wurden erfindungsgemäße Betonformteile mit Betonformteilen verglichen, die insbesondere keine Oberflächenbehandlung mit Kali-Wasserglas erhalten hatten.

Es wurden Proben des Typs (a), (b) und (c) hergestellt. Bei den Proben (c) handelte es sich um erfindungsgemäße Betonformteile.

### Proben (a) - Vergleich:

Bei diesen Proben handelte es sich um Betonbodenplatten des Formats 10 × 10 cm und der Stärke 2 cm. Sie wurden hergestellt, indem halbtrockener Estrichbeton, dem 15 Vol.-% Iriodin® Moosgrün zugegeben worden waren, in eine Stahlform eingebracht und verdichtet wurde.

Die vollständig gehärtete Platte zeigte das typische Zementgrau, wobei nur an Stellen der Oberfläche, die nicht völlig eben waren, kleine Nester des grünen Perlglanzpigments erkennbar waren. Dieses Pigment konnte jedoch leicht herausgekratzt werden.

### Proben (b) - Vergleich:

Bei diesen Proben handelte es sich ebenfalls um Betonbodenplatten des Formats 10 × 10 cm. Sie wurden durch Einbringen einer 1,5 cm starken Schicht halbtrockenen Estrichbetons in eine Stahlform und anschließende Aufgabe einer 0,5 cm starken Vorsatzschicht gebildet. Die Vorsatzschicht bestand dabei aus Estrichbeton ohne größere Steine, dem 15 Vol.-% Iriodin® Pigment Moosgrün zugegeben worden waren. Nach Aufbringung der Vorsatzschicht wurde verdichtet.

Die fertigen abgebundenen Betonbodenplatten zeigten eine deutliche Grünfärbung durch die Eigenfarbe des Iriodin® Pigments, jedoch nur einen sehr schwachen Perlglanz. Weiter ließen sich die an der Oberfläche befindlichen Pigmentteilchen leicht mit einem Fingernagel abkratzen.

### Proben (c) - Erfindung:

Es wurden Betonbodenplatten des Formats 10 × 10 cm hergestellt. Dazu wurde eine 1,5 cm starke Schicht halbtrockenen Estrichbetons ohne größere Steine in eine entsprechende Stahlform eingegeben und darauf wurde eine 0,5 cm starke Vorsatzschicht aufgebracht, die neben Estrichbeton ohne größere Steine 15 Vol.-% Iriodin® Pigment Moosgrün und 10 Vol.-% Kalk enthielt. Anschließend wurde verdichtet. Vor dem Abbinden wurde auf die Vorsatzschicht über einen Zeitraum von 4 Tagen mehrfach Kali-Wasserglas aufgebracht, bis Sättigung eintrat.

Die vollständige abgebundenen Platten unterschieden sich deutlich von den Proben (b), und zwar wiesen sie eine deutlich intensivere Grünfärbung und einen deutlich intensiveren Perlglanz auf. Weiter ließen sich die Pigmentteilchen von der Oberfläche der Vorsatzschicht nicht abkratzen.

## Patentansprüche

1. Verfahren zur Herstellung eines Betonformteils mit Glanzeffekt, bei dem man
(a) eine nicht-abgebundene Betonmischung zu einem Betongrundkörper formt,
(b) auf den Grundkörper eine nicht-abgebundene Vorsatzschicht aufbringt, welche (i) Beton und zusätzlich (ii) Glanzpigment enthält,
(c) auf die nicht-abgebundene Vorsatzschicht eine wäßrige Alkalisilicat-Lösung aufbringt und
(d) die Betonmischung des Betongrundkörpers und die Vorsatzschicht abbinden läßt.

2. Verfahren nach Anspruch 1, **dadurch gekennzeichnet,** daß die Betonmischung in Stufe (a) und/oder der Beton in Stufe (b) auf der Basis von Portlandzement ist (sind).

3. Verfahren nach Anspruch 1 oder 2, **dadurch gekennzeichnet,** daß die nicht-abgebundene Vorsatzschicht in Stufe (b) zusätzlich (iii) Calciumcarbonat, Calciumoxid und/oder Calciumhydroxid enthält.

4. Verfahren nach Anspruch 3, **dadurch gekennzeichnet,** daß das Calciumcarbonat (iii) in Form von Kalk oder Kreide eingesetzt wird.

5. Verfahren nach Anspruch 3 oder 4, **dadurch gekennzeichnet,** daß das Calciumcarbonat, Calciumoxid und/oder Calciumhydroxid in einer Gesamtmenge von höchstens 10 Vol.-% und insbesondere höchstens 6 Vol.-% bezogen auf das Volumen des Betons (i) eingesetzt wird (werden).

6. Verfahren nach einem der Ansprüche 1 bis 5, **dadurch gekennzeichnet,** daß als Glanzpigment (ii) ein Perlglanzpigment und/oder ein Interferenzpigment eingesetzt wird.

7. Verfahren nach einem der Ansprüche 1 bis 6, **dadurch gekennzeichnet**, daß das Glanzpigment (ii) in einer Menge von mindestens 5 Vol.-% und insbesondere 5 bis 30 Vol.-% und besonders bevorzugt 5 bis 20 Vol.-% bezogen auf das Volumen des Betons (i) eingesetzt wird.

8. Verfahren nach einem der Ansprüche 1 bis 7, **dadurch gekennzeichnet,** daß das Glanzpigment (ii) als Suspension in einem wäßrigen Caseinleim eingesetzt wird.

9. Verfahren nach Anspruch 8, **dadurch gekennzeichnet,** daß der Caseinleim Calciumhydroxid enthält.

10. Verfahren nach einem der Ansprüche 1 bis 9, **dadurch gekennzeichnet,** daß die Vorsatzschicht in Stufe (b) zusätzlich (iv) Bimssteinpulver enthält.

11. Verfahren nach einem der Ansprüche 1 bis 10, **dadurch gekennzeichnet,** daß als wäßrige Alkalisilicat-Lösung eine wäßrige Lösung von Natriumsilicat und insbesondere von Kaliumsilicat eingesetzt wird.

12. Verfahren nach einem der Ansprüche 1 bis 11, **dadurch gekennzeichnet,** daß die wäßrige Alkalisilicat-Lösung in einer für die Sättigung der Vorsatzschicht und insbesondere auch des Betongrundkörpers ausreichenden Menge eingesetzt wird.

13. Verfahren nach einem der Ansprüche 1 bis 12, **dadurch gekennzeichnet,** daß nach Durchführung von Stufe (a) und vor Stufe (b) auf den Betongrundkörper eine den Durchtritt von Wasser behindernde Sperrschicht aufgebracht wird.

14. Verfahren nach Anspruch 13, **dadurch gekennzeichnet,** daß die Sperrschicht gebildet wird, indem wäßrige Alkalisilicat-Lösung auf den Betongrundkörper aufgebracht wird.

15. Verfahren nach einem der Ansprüche 1 bis 14, **dadurch gekennzeichnet,** daß die Vorsatzschicht in Stufe (b) aufgebracht wird, indem zuerst eine Mischung mit Gehalt an (i) Beton und dann auf diese Mischung eine Schicht (ii) Glanzpigment aufgebracht wird.

16. Verfahren nach einem der Ansprüche 1 bis 15, **dadurch gekennzeichnet,** daß zwischen den Stufen (b) und (c) der Grundkörper mit der aufgebrachten Vorsatzschicht verdichtet wird.

17. Betonformteil mit Glanzeffekt, welches gemäß dem Verfahren nach einem der Ansprüche 1 bis 16 herstellbar ist.

18. Verwendung von wäßriger Alkalisilicat-Lösung zur Erhöhung des Glanzeffektes von Betonformteilen, die eine Vorsatzschicht mit Gehalt an (i) Beton und zusätzlich an (ii) Glanzpigment aufweisen und/oder zur Verbesserung der Einbindung des Glanzpigmentes (ii) in solche Betonformteile, indem die wäßrige Alkalisilicat-Lösung auf die nicht-abgebundene Vorsatzschicht aufgebracht wird.

## Claims

1. Process for manufacturing a concrete preform with a gloss effect, in which
(a) a non-set concrete mixture is shaped into a concrete basic body,
(b) a non-set intermediate layer which contains (i) concrete and additionally (ii) gloss pigment, is applied to the basic body,
(c) a watery alkali silicate solution is applied to the non-set intermediate layer and
(d) the concrete mixture of the concrete basic body and the intermediate layer are allowed to set.

2. Process according to claim 1, **characterized in that** the concrete mixture in step (a) and/or the concrete in step (b) is (are) based on Portland cement.

3. Process according to claim 1 or 2, **characterized in that** the non-set intermediate layer in step (b) additionally contains (iii) calcium carbonate, calcium oxide and/or calcium hydroxide.

4. Process according to claim 3, **characterized in that** the calcium carbonate (iii) is used in the form of lime or chalk.

5. Process according to claim 3 or 4, **characterized in that** the calcium carbonate, calcium oxide and/or calcium hydroxide is (are) used in an overall quantity of 10 vol-% at most and in particular 6 vol-% at most relative to the volume of the concrete (i).

6. Process according to one of claims 1 to 5, **characterized in that** a pearl gloss pigment and/or a interference pigment is used as a gloss pigment (ii).

7. Process according to one of claims 1 to 6, **characterized in that** the gloss pigment (ii) is used in an amount of at least 5 vol-% and in particular 5 to 30 vol-% and particularly preferably 5 to 20 vol-% relative to the volume of the concrete (i).

8. Process according to one of claims 1 to 7, **characterized in that** the gloss pigment (ii) is used as a suspension in a watery casein adhesive.

9. Process according to claim 8, **characterized in that** the casein adhesive contains calcium hydroxide.

10. Process according to one of claims 1 to 9, **characterized in that** the intermediate layer in step (b) additionally contains (iv) pumice powder.

11. Process according to one of claims 1 to 10, **characterized in that** a watery solution of sodium silicate and in particular of potassium silicate is used as watery alkali silicate solution.

12. Process according to one of claims 1 to 11, **characterized in that** the watery alkali silicate solution is used in an amount sufficient for the saturation of the intermediate layer and in particular also of the concrete basic body.

13. Process according to one of claims 1 to 12, **characterized in that** a barrier layer which prevents the entry of water is applied to the concrete basic body after carrying out step (a) and before step (b).

14. Process according to claim 13, **characterized in that** the barrier layer is formed by applying watery alkali silicate solution to the concrete basic body.

15. Process according to one of claims 1 to 14, **characterized in that** the intermediate layer in step (b) is applied by firstly applying a mixture containing (i) concrete and then applying a layer of (ii) gloss pigment to this mixture.

16. Process according to one of claims 1 to 15, **characterized in that** the basic body with the applied intermediate layer is compressed between steps (b) and (c).

17. Concrete prefcrm with gloss effect, which can be manufactured according to the process according to one of claims 1 to 16.

18. Use of watery alkali silicate solution to increase the gloss effect of concrete preforms which include an intermediate layer containing (i) concrete and additionally (ii) gloss pigment and/or for improving the incorporation of the gloss pigment (ii) in such concrete preforms, by applying the watery alkali silicate solution to the non-set intermediate layer.

## Revendications

1. Procédé pour la fabrication d'une pièce moulée en béton à effet brillant, dans lequel
(a) on moule une composition de béton non prise, en un corps de base en béton,
(b) on applique sur le corps de base une couche de parement non prise, qui contient (I) du béton et en outre (II) un pigment brillant,
(c) on applique sur la couche de parement non prise une solution aqueuse de silicate alcalin et
(d) on fait prendre la composition de béton du corps de base en béton et la couche de parement.

2. Procédé selon la revendication 1, caractérisé en ce que la composition de béton dans l'étape (a) et/ou le béton dans l'étape (b) est(sont) à base de ciment Portland.

3. Procédé selon la revendication 1 ou 2, caractérisé en ce que la couche de parement non prise dans l'étape (b) contient en outre (III) du carbonate de calcium, de l'oxyde de calcium et/ou de l'hydroxyde de calcium.

4. Procédé selon la revendication 3, caractérisé en ce que le carbonate de calcium (III) est utilisé sous forme de chaux ou de craie.

5. Procédé selon la revendication 3 ou 4, caractérisé en ce que le carbonate de calcium, l'oxyde de calcium et/ou l'hydroxyde de calcium est(sont) utilisé(s) en une quantité totale d'au maximum 10 % en volume et en particulier d'au maximum 6 % en volume, par rapport au volume du béton (I).

6. Procédé selon l'une des revendications 1 à 5, caractérisé en ce que l'on utilise comme pigment brillant (II) un pigment nacré et/ou un pigment interférentiel.

7. Procédé selon l'une des revendications 1 à 6, caractérisé en ce que le pigment brillant (II) est utilisé en une quantité d'au moins 5 % en volume et en particulier de 5 à 30 % en volume, et de façon particulièrement préférée de 5 à 20 % en volume, par rapport au volume du béton (I).

8. Procédé selon l'une des revendications 1 à 7, caractérisé en ce que le pigment brillant (II) est utilisé sous forme de suspension dans une colle aqueuse à la caséine.

9. Procédé selon la revendication 8, caractérisé en ce que la colle à la caséine contient de l'hydroxyde de calcium.

10. Procédé selon l'une des revendications 1 à 9, caractérisé en ce que la couche de parement dans l'étape (b) contient en outre (IV) de la poudre de ponce.

11. Procédé selon l'une des revendications 1 à 10, caractérisé en ce que l'on utilise comme solution aqueuse de silicate alcalin une solution aqueuse de silicate de sodium et en particulier de silicate de potassium.

12. Procédé selon l'une des revendications 1 à 11, caractérisé en ce que la solution aqueuse de silicate alcalin est utilisée en une quantité suffisante pour la saturation de la couche de parement et en particulier également du corps de base en béton.

13. Procédé selon l'une des revendications 1 à 12, caractérisé en ce que, après l'exécution de l'étape (a) et avant l'étape (b), on applique sur le corps de base en béton une couche barrière empêchant la pénétration de l'eau.

14. Procédé selon la revendication 13, caractérisé en ce que la couche barrière est formée par application d'une solution aqueuse de silicate alcalin sur le corps de base en béton.

15. Procédé selon l'une des revendications 1 à 14, caractérisé en ce que l'on applique la couche de parement dans l'étape (b) en appliquant d'abord un mélange ayant une teneur en (I) béton et on applique ensuite sur ce mélange une couche (II) de pigment brillant.

16. Procédé selon l'une des revendications 1 à 15, caractérisé en ce que, entre les étapes (b) et (c), le corps de base est compacté avec la couche de parement appliquée.

17. Pièce moulée en béton à effet brillant, qui peut être fabriquée selon l'une des revendications 1 à 16.

18. Utilisation d'une solution aqueuse de silicate alcalin pour accroître l'effet brillant de pièces moulées en béton qui comportent une couche de parement ayant une teneur en (I) béton et en outre en (II) pigment brillant et/ou pour améliorer l'intégration du pigment brillant (ii) dans de telles pièces moulées en béton, par application de la solution aqueuse de silicate alcalin sur la couche de parement non prise.
